# EUROPÄISCHE PATENTSCHRIFT

(11) **EP 0 524 412 B1**
(45) Veröffentlichungstag und Bekanntmachung des Hinweises auf die Patenterteilung: **07.09.1994**
(21) Anmeldenummer: 92109762.2
(22) Anmeldetag: 10.06.1992
(51) Int. Cl.: F16B 12/10, F16B 12/24, E05D 5/10

(54) **Befestigungselement mit einer dübelartigen Buchse**
Fastener with a dowel-like sleeve
Elément de fixation avec un manchon construit comme une cheville

(30) Priorität: 25.07.1991 DE 4124727
(43) Veröffentlichungstag der Anmeldung: 27.01.1993
(73) Patentinhaber: ARTURO SALICE S.p.A., I-22060 Novedrate (Como) (IT)
(72) Erfinder:
(74) Vertreter: Gossel, Hans K., Dipl.-Ing.

(56) Entgegenhaltungen:
- DE-A- 3 029 762
- DE-A- 3 311 223
- DE-A- 3 717 376
- DE-A- 3 841 933
- DE-U- 8 717 482

## Beschreibung

Die Erfindung betrifft ein Befestigungselement für ein mit einer Befestigungsbohrung versehenes Teil, vorzugsweise für ein Scharnierteil, mit einer in ein vorgebohrtes Loch einsetzbaren dübelartigen Buchse, in deren durchgehendem Loch ein mit einem Kopf versehener Stift durch etwa eine Vierteldrehung verriegelbar ist.

Bei der industriellen Fertigung von Möbeln ist es eine Forderung, Beschlagteile und insbesondere auch Scharniere einfach und schnell mit gutem und festem Sitz montieren zu können. Dieser Forderung vermögen übliche, auch mit Dübeln versehene Befestigungsschrauben nicht zu genügen, weil die Schrauben bis zu ihrem festen Sitz mit mehreren Umdrehungen eingeschraubt werden müssen, was auch dann umständlich und zeitraubend ist, wenn motorisch angetriebene Schraubenzieher verwendet werden.

Bei einem aus dem DE-U-87 17 482 bekannten Befestigungselement der eingangs angegebenen Art werden die dübelartigen Buchsen in der Weise in vorgebohrte Bohrungen eingedrückt, daß sie in diesen fest verankert sind. Die Durchgangslöcher der Buchsen sind mit hinterschnittenen Stufen versehen, an denen hammerartige Querstücke der Stifte verriegelnd angreifen. Dieses bekannte Befestigungselement ermöglicht zwar eine schnelle Montage. Die vormontierten Buchsen lassen sich aber nur dann genügend fest durch Eindrücken in den vorgebohrten Bohrungen verankern, wenn enge Fertigungstoleranzen beachtet werden. Darüber hinaus sind vormontierte Buchsen häufig unerwünscht, da sie auch an nicht benötigten Stellen angebracht sind.

Aufgabe der Erfindung ist es, ein Befestigungselement der eingangs angegebenen Art zu schaffen, das sich einfach und schnell mit festem Sitz montieren läßt.

Erfindungsgemäß wird diese Aufgabe bei einem Befestigungselement der gattungsgemäßen Art dadurch gelöst, daß die aus elastischem Material bestehende Buchse im Bereich ihres rohrförmigen Schaftes mit mindestens einem längs verlaufenden Schlitz versehen ist und das Loch in dem geschlitzten Bereich einen länglichen Querschnitt aufweist und daß der Schaft des Stiftes mindestens einen Bereich mit einem dem Lochquerschnitt in etwa entsprechenden Querschnitt besitzt, der auf seinen einander gegenüberliegenden schmaleren Seiten mit in Umfangsrichtung verlaufenden gewindeartigen schneidenden Stegen versehen ist. Das erfindungsgemäße Befestigungselement läßt sich einfach und schnell montieren, ohne daß enge, die Herstellung verteuernde Toleranzen eingehalten werden müßten. Die Buchse wird in das vorgebohrte Loch eingesetzt und der als Halteelement dienende Stift spreizt den geschlitzten Schaft der Buchse aufgrund seiner zu seiner Drehachse symmetrischen Exzentrizität durch eine Drehung um etwa 90 Grad in der Weise, daß die Buchse kraftschlüssig in der Bohrung gehalten ist. Der Stift selbst ist nach einer Vierteldrehung sicher in der Buchse verankert, weil sich seine an seinen abgerundeten Schmalseiten vorgesehenen schneidenden Stege in gegenüberliegende Wandungsbereiche der Durchgangsbohrung der Buchse einschneiden.

Das erfindungsgemäße Befestigungselement weist weiterhin den Vorteil einer einfachen Lösbarkeit auf, weil die Verbindung durch Rückdrehen des Stiftes um etwa eine Vierteldrehung wieder gelöst werden kann.

Zweckmäßigerweise sind die einander gegenüberliegenden Wandungen der im Querschnitt breiteren Seite des Loches der Buchse durch eingelegte Metallstreifen gebildet. Diese Metallstreifen werden an der Buchse verankert und die schneidenartigen Teile des Haltestiftes schneiden sich bei ihrer Drehung um etwa 90 Grad in diese Metallstreifen ein. Die Härte des Stiftes und der Metallstreifen wird zweckmäßigerweise so gewählt, daß die Schneiden des Stiftes ausreichend tief in die Metallstreifen einschneiden können.

Zweckmäßigerweise hat der Schaft des Stiftes die Form des Schaftes einer selbstschneidenden Schraube, deren Gewinde auf einander gegenüberliegenden Seiten weggeschnitten sind. Dabei können die gegenüberliegenden Seiten bis über den Grund der Gewindegängen hinaus in das Schaftteil hinein abgeflacht sein. Auf diese Weise bildet der Stift die Form eines zweiflügeligen zu einer Längsmittelebene symmetrischen Exzenters, der bei seiner Drehung gegenüberliegende Mantelteile der Buchse gleichmäßig spreizt.

Zweckmäßigerweise weist der Schaft des Stiftes somit die Querschnittsform eines Rechtecks mit abgerundeten Schmalseiten auf.

Die Buchse kann aus Metall bestehen. Sie besteht aber vorteilhafterweise aus Kunststoff.

Zweckmäßigerweise sind die in die Buchse eingesetzten Metallstreifen U-förmig durch einen Steg miteinander verbunden, so daß sie ein einstückiges Einsatzteil bilden.

Die Metallstreifen können aus einem U-förmigen Einsatz bestehen, dessen die Streifen verbindender Stegteil den Endbereich des Loches verschließt. Ein derartiges Einsatzteil kann in einfacher Weise durch Biegen eines Metallstreifens hergestellt werden.

Zweckmäßigerweise sind die Metallstreifen an mindestens einem ihrer Ränder mit mindestens einem abgewinkelten Fortsatz versehen. Diese Fortsätze können haltend an den mit den schneidenartigen Stegen versehenen Schmalseiten des Haltestiftes angreifen, so daß sich das zu befestigende Teil durch Vormontage mit der dübelartigen Buchse verbinden läßt.

Die das Einsatzteil bildenden Metallstreifen können auch durch ein seitliches Stegteil miteinander verbunden sein.

Zweckmäßigerweise sind die die Metallstreifen bildenden Schenkel des Einsatzes mit nach außen hin abgewinkelten Endbereichen versehen, die in radialer Richtung in am unteren Ende der Buchse vorgesehene Aussparungen greifen. Diese abgewinkelten Endbereiche liegen bei den vormontierten Buchsen innerhalb des ideellen einhüllenden Mantels der Buchse, so daß sie das Einsetzen der Buchsen in vorgebohrte Löcher nicht stören. Sie weisen aber eine so große Länge auf, daß sie beim Spreizen der Schenkel des Einsatzes durch Drehung des Stiftes aus dem Hüllzylinder der Buchse heraustreten und schneidend in die Wandung des vorgebohrten Loches eingreifen.

Nach einer anderen Ausführungsform der Erfindung ist vorgesehen, daß der metallische Einsatz in eine in Seitenansicht etwa rechteckige Aussparung der Buchse eingesetzt ist. Bei dieser Ausführungsform erfolgt die Verankerung des Befestigungselementes durch Spreizen der streifenförmigen Schenkel des Einsatzes.

Um die Verankerung des Einsatzes in der Bohrung zu verbessern, sind die streifenartigen Schenkel zweckmäßigerweise mit herausgebogenen Zungen mit scharfkantigen Endbereichen versehen.

Nach einer besonders vorteilhaften Ausgestaltung der Erfindung ist vorgesehen, daß der Stift zwischen seinem Kopf und seinem Schaftteil mit einem verdickten Bund mit nockenartigem exzentrischen Querschnitt versehen ist, der in einen Bohrungsabschnitt der Befestigungsbohrung oder der Buchse liegt, der einen derartigen Querschnitt aufweist, daß der Stift nur etwa eine Vierteldrehung ausführen kann. Die Montage wird dadurch erleichtert, weil der Monteur nicht besonders darauf achten muß, nur etwa mit dem Schraubenzieher eine Vierteldrehung des Stiftes auszuführen. Der Monteur kann zur Befestigung den Stift bis an den Anschlag drehen, ohne darauf achten zu müssen, nur etwa eine Vierteldrehung auszuführen.

Zweckmäßigerweise weist der Stift einen oberen Schaftbereich mit einem selbstschneidenden Gewinde auf, das oberhalb des Einsatzes in die Bohrung der Buchse einschneidet. Auf diese Weise ist im Wege der Vormontage die dübelartige Buchse mit dem zu befestigenden Teil verbunden.

Der Stift kann zu seiner Verbindung mit dem zu befestigenden Teil auch zwischen dem Kopf und dem Schaft einen verbreiterten Bund aufweisen, dessen Querschnitt dem Querschnitt des gebördelten Befestigungsloches entspricht, wobei der Bund an seinem unteren Ende mit einer diesen verbreiternden Wulst versehen ist, die an dem Rand des gebördelten Loches anliegt. Auf diese Weise ist der Stift an dem zu befestigenden Teil drehbar, aber in axialer Richtung unverschieblich gehalten. Die den Bund verbreiternde Wulst kann beispielsweise durch Pressen gebildet werden.

Nach einer anderen Ausführungsform ist der Stift am unteren Ende seine Schaftes mit einem verbreiterten Nietkopf versehen, auf dessen Rand sich im ungespreizten Zustand des Einsatzes die Enden der streifenförmigen Schenkel des Einsatzes abstützen.

Ausführungsbeispiele der Erfindung werden nachstehend anhand der Zeichnung näher erläutert. In dieser zeigt
- Fig.1: einen Längsschnitt durch eine erste Ausführungsform eines Befestigungselements in der ungespreizten Montagestellung,
- Fig.2: eine der Fig.1 entsprechende Darstellung des Befestigungselements in der montierten Stellung, in der der Stift gegenüber der Darstellung in Fig.1 um etwa 90 Grad gedreht ist,
- Fig.3: einen Querschnitt durch das Befestigungselement längs der Linie III-III in Fig.1,
- Fig.4: eine Draufsicht auf die dübelartige Buchse,
- Fig.5: eine Seitenansicht des Stifts,
- Fig.6: eine Unteransicht des Stifts,
- Fig.7: eine perspektivische Ansicht des metallischen Einsatzes,
- Fig.8: einen Längsschnitt durch eine zweite Ausführungsform eines Befestigungselements in der ungespreizten Montagestellung,
- Fig.9: eine der Fig.8 entsprechende Darstellung des Befestigungselements in der gespreizten montierten Stellung,
- Fig.10: einen gegenüber der Fig.8 um 90 Grad gedrehten Längsschnitt durch das Befestigungselement,
- Fig.11: eine Unteransicht der dübelartigen Buchse mit metallischem Einsatz,
- Fig.12: eine Unteransicht des Stiftes,
- Fig.13a und b: Querschnitte durch das verdickte Bundteil des Stiftes im Bereich einer den Drehwinkel begrenzenden Aussparung der dübelartigen Buchse in der Montagestellung und in der um 90 Grad gedrehten montierten Stellung,
- Fig.14: einen Längsschnitt durch eine dritte Ausführungsform eines Befestigungselements in der ungespreizten Montagestellung,
- Fig.15: einen Längsschnitt durch das Befestigungselement nach Fig.14 in der montierten Stellung,
- Fig.16: eine Seitenansicht des Stiftes,
- Fig.17: eine Seitenansicht der dübelartigen Buchse und
- Fig.18: eine Seitenansicht des metallischen Einsatzes.

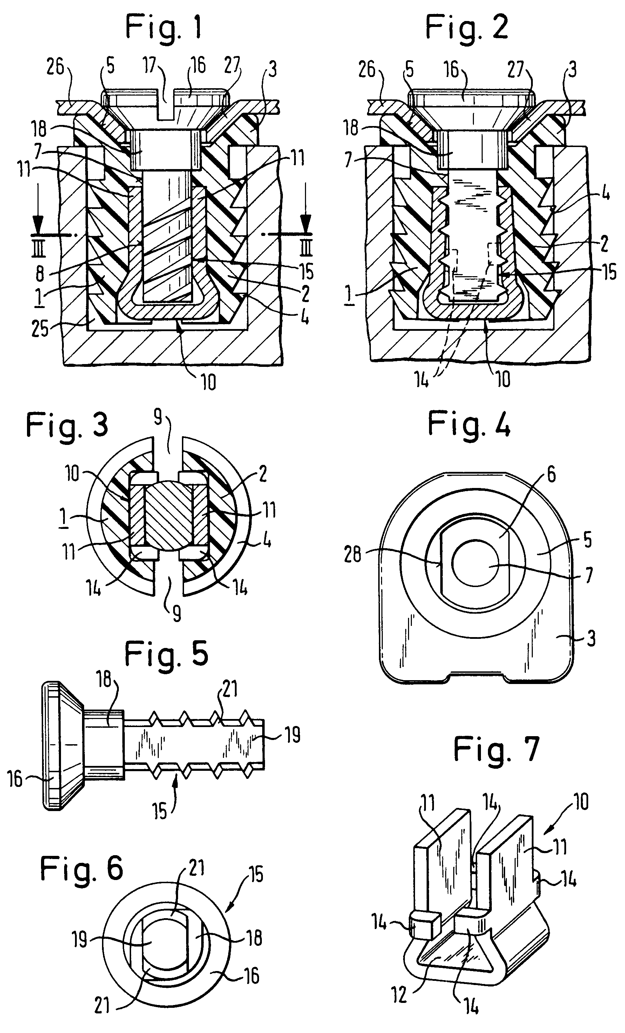

Das aus den Fig.1 bis 7 ersichtliche Befestigungselement besteht aus einer dübelartigen Buchse 1 aus Kunststoff, die einen im wesentlichen zylindrischen Schaftteil 2 besitzt, der an seinem oberen Ende eine flanschartige Verbreiterung 3 trägt. Das Schaftteil 1 ist auf seinem Mantel mit ringartigen Nuten versehen, die im Querschnitt ein sägezahnartiges Profil 4 bilden, wobei die Zähne etwa radiale Flanken und an diese anschließende abgeschrägte Flanken aufweisen, die schräg in Richtung zum unteren Ende der Buchse verlaufen, so daß das sägezahnartige Profil in Auszugsrichtung sperrend wirkt.

Das obere flanschförmige Endteil der Buchse ist etwa bis zur Längsmittelebene kreisscheibenförmig ausgebildet und daran anschließend etwa rechteckig mit abgerundeten Ecken.

Die Buchse 1 weist ein Durchgangsloch mit unterschiedlich ausgebildeten Abschnitten auf. Im Bereich ihrer obigen flanschförmigen Verbreiterung ist die Buchse mit einem Abschnitt 5 in Form eines hohlen Kegelstumpfes versehen. An den Grund dieses trichterförmigen Abschnitts schließt ein Bohrungsabschnitt 6 an, der die Form eines Rechtecks mit abgerundeten Schmalseiten besitzt. An den Abschnitt 6 schließt ein kreisrunder Bohrungsabschnitt 7 an, der sich hinter einer Stufe zu einem Bohrungsabschnitt 8 mit etwa rechteckigem Querschnitt erweitert. Im unteren Endbereich erweitert sich der Bohrungsabschnitt mit rechteckigem Querschnitt trichterförmig zum Ende hin.

Der mit dem sägezahnartigen Ringprofil 4 versehene Schaftbereich der Buchse 1 ist auf gegenüberliegenden Seiten mit Längsschlitzen 9 versehen, die in einer gemeinsamen Längsmittelebene liegen und unterhalb des flanschförmigen Teils 3 enden.

In den Bohrungsabschnitt 8 mit rechteckigem Querschnitt is ein metallischer Einsatz 10 eingesetzt, der aus einem etwa U-förmig gebogenen streifenförmigen Zuschnitt besteht. Der Einsatz 10 weist zwei aufragende streifenförmige Schenkel 11 auf, die an gegenüberliegenden Wandungen des Lochabschnitts 8 mit rechteckigem Querschnitt anliegen und deren oberen Enden an die Stufe zu dem Bohrungsabschnitt 7 anstoßen. In Richtung auf den Verbindungssteg 12 sind die streifenartigen Schenkel 11 winkelig nach außen hin abgebogen, wobei dieser in Seitenansicht etwa dreieckige Bereich des Einsatzes 10 in dem unteren erweiterten Lochabschnitt liegt.

An ihren seitlichen Rändern sind die geraden Teile der streifenförmigen Schenkel 11 mit nach innen hin abgewinkelten Fortsätzen 14 versehen, die auf denselben Seiten der Höhe nach versetzt sind, wobei dieser Versatz der Steigung des selbstschneidenden Gewindes des Stiftes 15 entspricht.

Der Stift 15 weist einen versenkbaren Kopf 16 auf, der mit einem Schlitz 17 zum Angriff eines Schraubenziehers versehen ist. An den Kopf 16 schließt ein bundförmiges Teil 18 an, das im Querschnitt in der aus Fig.6 ersichtlichen Weise etwa rautenförmig ausgebildet ist, wobei die größeren Winkelbereiche abgerundet und der Durchmesser zwischen den kleineren Winkelbereichen etwa dem Durchmesser des abgerundeten Bereiches des Bohrungsabschnitts 6 entspricht.

An den Bundbereich 18 schließt ein Schaftteil 19 an, das die Form einer zylindrischen selbstschneidenden Schraube hat, die auf einander gegenüberliegenden Seiten bis in den Kernbereich hinein abgeflacht ist. Wie aus Fig.6 ersichtlich ist, weist somit der Schaftbereich einen etwa rechteckigen Querschnitt auf, wobei die Schmalseiten durch die erhaltengebliebenen Teile der selbstschneidenden Schraube mit den Abschnitten 21 der Gewindgänge gebildet sind.

Das aus den Fig.1 bis 7 ersichtliche Befestigungselement kann bereits fabrikmäßig vormontiert werden, so daß es zu seiner Montage lediglich in zylindrische Sacklochbohrungen 25 in ein Möbelteil o.dgl. eingesetzt werden muß.

Zur Vormontage wird in die dübelartige Buchse 1 das Einsatzteil 10 von unten her eingeschoben, bis sich die oberen Enden der streifenförmigen Schenkel 11 auf der Stufe zu dem Bohrungsabschnitt 7 abstützen. Die Buchse 2 mit dem Einsatz 10 wird sodann an die Unterseite einer Befestigungsbohrung eines zu befestigenden Teils 26, bei dem es sich beispielsweise um den Flansch eines topfförmigen Scharnierteils handeln kann, in der Weise angesetzt, daß der zylinderstumpfförmig gebördelte Bohrungsrand 27 in den komplementären Bohrungsabschnitt 5 der Buchse greift. Anschließend wird von oben her der Stift 15 eingesetzt, und zwar in der Weise, daß die abgeflachten Flanken des Schaftteils 19 an den Innenseiten der metallischen Streifen 11 anliegen, ohne diese zu spreizen. Die nach innen hin abgebogenen Vorsprünge 14 greifen halternd an den bogenförmigen Gewindegängen 21 an, so daß das vormontierte Befestigungselement unverlierbar an dem zu befestigenden Teil 26 gehalten ist.

Wird nach dem Einsatz der dübelartigen Buchse 2 in das vorgebohrte Loch 25 der Stift 15 um etwa 90 Grad gedreht, spreizen die exzentrischen Teile des Schafts 19 die streifenartigen Schenkel 11, so daß auch die Buchse 2 gespreizt wird und sich an den Wandungen des Loches 25 verklammert. Dabei schneiden sich die sägezahnartigen Profile 4 in die Wandung der Bohrung 25 ein, was zu einer guten Verankerung führt.

Bei einer Drehung um 90 Grad stoßen die einander gegenüberliegenden spitzeren Winkelbereiche des bundartigen Abschnitts 18 an die ebenen Flanken 28 des Bohrungsabschnitts 6, so daß ein Überdrehen verhindert wird.

Wird der Stift 17 um 90 Grad zurückgedreht, läßt sich das Befestigungselement wieder aus der Bohrung 25 herausziehen und später zum Zwecke einer erneuten Verankerung wieder einsetzen.

Der etwa rechteckige Teil des Flansches der dübelartigen Buchse kann gleichzeitg auch als Verdrehsicherung dienen, indem sich dieser Teil an einen Anschlag des zu befestigenden Teils anlegt.

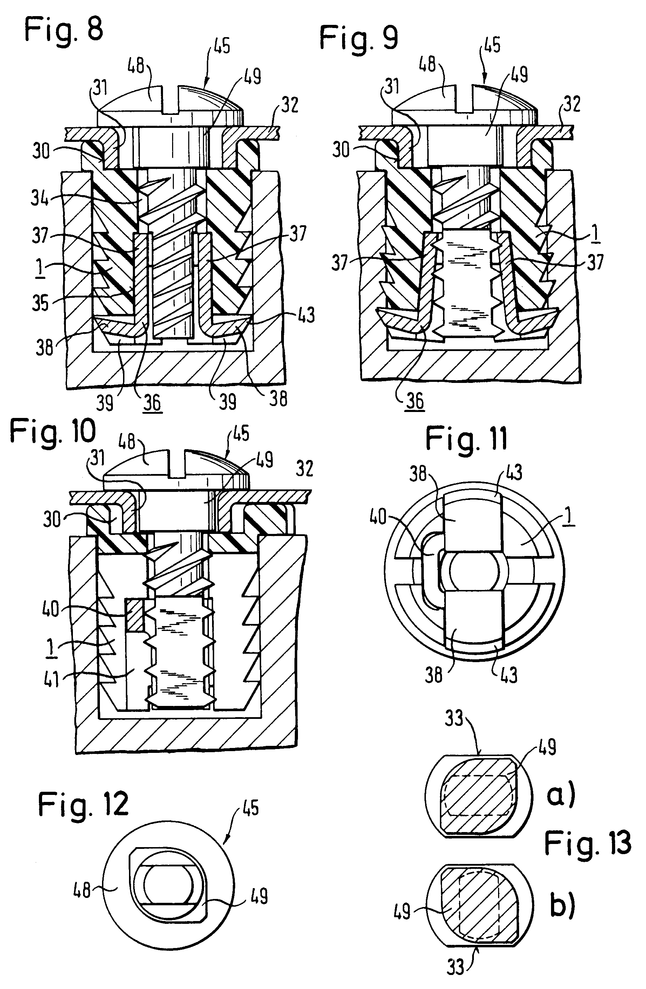

Bei dem Ausführungsbeispiel nach den Fig.8 bis 13 weist die dübelartige Buchse 2 aus Kunststoff einen ersten zylindrischen Bohrungsabschnitt 30 auf, in den ein nach unten hin gebördelter Rand 31 der Befestigungsbohrung des zu befestigenden Teils 32 greift. Die von dem gebördelten Rand 31 eingefaßte Bohrung weist den aus Fig.13 ersichtlichen Querschnitt auf, der aus einem Kreis mit gegenüberliegenden abgeflachten Seiten 33 besteht.

An den Bohrungsabschnitt 30 schließt sich ein weiterer zylindrischer Bohrungsabschnitt 34 an. Diesem Bohrungsabschnitt 34 folgt ein Bohrungsabschnitt 35 mit etwa rechteckigem Querschnitt, in den das Einsatzteil 36 eingesetzt ist. Das Einsatzteil 36 besteht aus zwei zueinander parallelen Metallstreifen 37, dessen unteren Endbereiche 38 nach außen hin abgewinkelt sind und in Aussparungen 39 im unteren Endbereich der Buchse 2 liegen. Die beiden Metallstreifen 37 sind durch einen seitlichen Bügel 40 miteinander verbunden. Dieser Bügel liegt in einem seitlichen Teil 41 des im Querschnitt etwa rechteckigen Bohrungsabschnitts 35, so daß der Bohrungsabschnitt 35 in der aus Fig.10 ersichtlichen Weise in einer Längsebene unsymmetrisch ausgebildet ist.

Die abgewinkelten Endbereiche 38 der Metallstreifen 37 sind an ihren radial nach außen weisenden Endbereichen mit abgerundeten schneidenartigen Teilen 43 versehen.

Der Stift 45 weist einen mit einem Schlitz versehenen Kopf 48 und unterhalb dieses Kopfes einen bundartigen Teil 49 in Form einer Raute mit abgerundeten größeren Winkelbereichen auf. An den Bund 49 schließt sich ein mit einem Gewinde versehener Schaftteil an, wobei das selbstschneidende Gewinde zur Vormontage schneidend an den Wandungen des zylindrischen Bohrungsabschnitts 34 angreift. An den Schaftteil mit selbstschneidendem Gewinde schließt ein Schaftteil an, dessen gegenüberliegenden Seiten in der aus Fig.13 gestrichelt angedeuteten Weise abgeflacht sind. An den schmalen abgerundeten Seiten des Schaftes sind die selbstschneidenden Gewindegänge in der aus Fig.8 ersichtlichen Weise erhalten geblieben.

Der Bund 49 läßt sich in der durch den gebördelten Rand 31 gebildeten Befestigungsbohrung in der aus Fig.13a und 13b ersichtlichen Weise um 90 Grad drehen.

Wird der Stift 45 ausgehend von seiner aus Fig.8 ersichtlichen Montagestellung um 90 Grad in seine aus Fig.9 ersichtliche montierte Stellung gedreht, spreizen die nur auf gegenüberliegenden Seiten mit selbstschneidenden Gewinden versehene Bereiche des Stiftes 45 die streifenförmigen Schenkel 37 und damit auch die zylindrischen Halbschalen der Buchse 2. Gleichzeitig treten die Spitzen bzw. Schneiden aus dem Hüllzylinder der Buchse heraus und schneiden zusätzlich in die Wandungen des vorgebohrten Loches ein.

Die vormontierte Stellung des Befestigungselementes ist dadurch gesichert, daß das Einsatzteil 36 in der Buchse gehaltert und die Buchse dadurch an dem Stift festgelegt ist, daß die oberen voll vorhandenen selbstschneidenden Gewindegänge des Stiftes 45 in den oberen zylindrischen Bohrungsabschnitt 34 einschneiden.

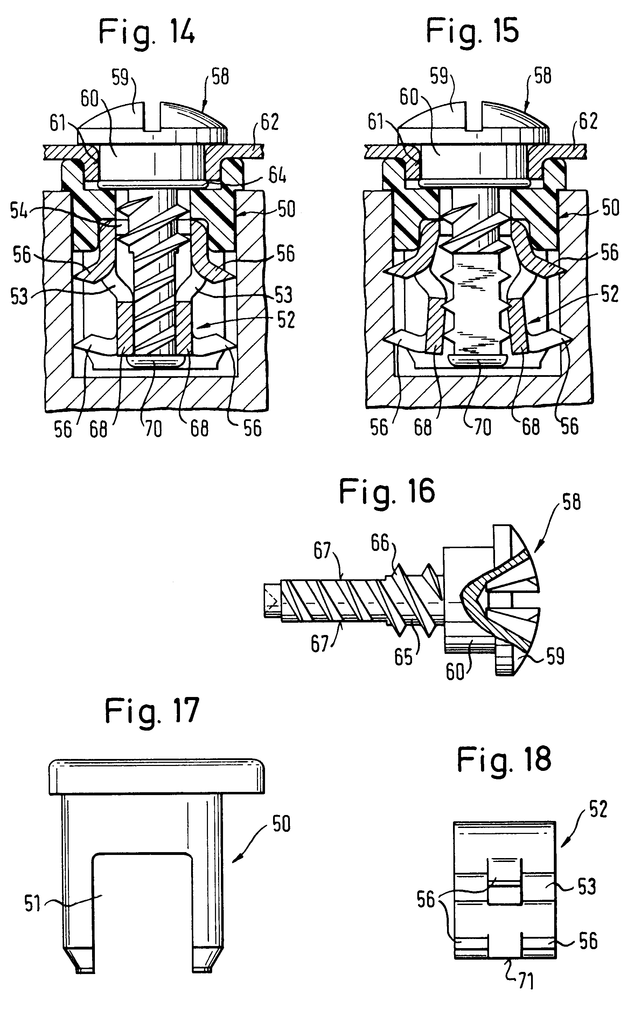

Bei dem Ausführungsbeispiel nach den Fig.14 bis 18 weist die ebenfalls aus einem Kunststoffspritzgußteil bestehende Buchse 50 in der aus Fig.17 ersichtlichen Seitenansicht eine frei nach unten hin auslaufende rechteckige Aussparung 51 auf. In diese Aussparung ist ein Einsatzteil 52 eingesetzt, das aus zwei zueinander etwa parallelen Metallstreifen 53 besteht. Diese Metallstreifen 53 sind durch einen oberen seitlichen Steg 54 miteinander verbunden.

Die beiden Streifen 53 sind in ihren unteren Endbereichen und in ihrem mittleren Bereich mit herausgebogenen Zungen 56 versehen, deren Enden schneidenartige Kanten aufweisen. Zwischen der oberen herausgebogenen Zunge und den unteren Zungen sind die Metallstreifen 53 in der aus den Fig.14 und 15 ersichtlichen Weise nach innen hin abgekröpft.

Der Stift 58 weist unterhalb seines mit einem Kreuzschlitz versehenen Kopfes 59 einen zylinderabschnittförmigen Bund 60 auf, der das durch die zylindrische Bördelung gebildete Loch 61 des zu befestigenden Teil 62 durchgreift. An seinem unteren Rand ist der Bund 60 nach seinem Einsetzen in das gebördelte Loch durch Pressen mit einer verbreiterten Wulst 64 versehen, die sich auf dem unteren Randbereich des gebördelten Loches in der aus den Fig.14 und 15 ersichtlichen Weise abstützt, so daß der Stift drehbar aber axial unverschieblich in dem gebördelten Loch 61 gehalten ist. Unterhalb seines Bundes 60 ist der Stift 58 mit einem Schaftteil 65 versehen, das ein selbstschneidendes Gewinde 66 trägt. Unterhalb des Abschnitts 65 ist der Schaft des Stifts in der anhand der beiden vorangegangenen Ausführungsbeispiele beschriebenen Weise auf gegenüberliegenden Seiten 67 abgeflacht, so daß die selbstschneidenden Gewindegänge nur noch auf den abgerundeten gegenüberliegenden Teilen vorhanden sind.

In der aus Fig.14 ersichtlichen Montagestellung liegen die unteren abgekröpften Bereiche 68 der Streifen 53 an den abgeflachten Seiten 67 des Stiftes an. Der Stift 58 ist an seinem unteren Ende mit einem Nietkopf 70 versehen, auf dessen Rändern sich die unteren Kanten 71 des Einsatzes 52 in der Montagestellung abstützen, so daß das Befestigungselement in seiner vormontierten Stellung sicher an den zu montierenden Teil 62 gehalten ist.

Wird der Stift 68 in der aus Fig.15 ersichtlichen Weise um etwa 90 Grad gedreht, werden die streifenförmigen Schenkel 53 nach außen gespreizt, wobei die herausgebogenen Zungen 56 mit ihren schneidenartigen Kanten in die Wandungen des vorgebohrten Loches eingreifen. Die selbstschneidenden Gewindegänge schneiden sich dabei in der aus Fig.15 ersichtlichen Weise in die streifenartigen Schenkel 53 ein.

## Patentansprüche

1. Befestigungselement für ein mit einer Befestigungsbohrung versehenes Teil, vorzugsweise für ein Scharnierteil, mit einer in ein vorgebohrtes Loch einsetzbaren dübelartigen Buchse, in deren durchgehendem Loch ein mit einem Kopf versehener Stift durch etwa eine Vierteldrehung verriegelbar ist,
**dadurch gekennzeichnet,**
daß die aus elastischem Material bestehende Buchse (1) im Bereich ihres rohrförmigen Schaftes mit mindestens einem längs verlaufenden Schlitz (9) versehen ist und das Loch in dem geschlitzten Bereich einen länglichen Querschnitt aufweist und
daß der Schaft (19) des Stiftes mindestens einen Abschnitt mit einem, dem Lochquerschnitt in etwa entsprechenden Querschnitt besitzt, der auf seinen einander gegenüberliegenden schmaleren Seiten mit in Umfangsrichtung verlaufenden gewindeartigen schneidenden Stegen (21) versehen ist.

2. Befestigungselement nach Anspruch 1, dadurch gekennzeichnet, daß die einander gegenüberliegenden Wandungen der im Durchmesser breiteren Seiten eines Abschnittes des Loches der Buchse (1) durch eingelegte Metallstreifen (11) gebildet sind.

3. Befestigungselement nach Anspruch 1 oder 2, dadurch gekennzeichnet, daß der Schaft (19) des Stiftes (15) die Form des Schaftes einer selbstschneidenden Schraube hat, deren Gewinde auf gegenüberliegenden Seiten weggeschnitten sind.

4. Befestigungselement nach einem der Ansprüche 1 bis 3, dadurch gekennzeichnet, daß ein Teil des Schaftes (19) des Stiftes (15) die Querschnittsform eines Rechtecks mit abgerundeten Schmalseiten aufweist.

5. Befestigungselement nach einem der Ansprüche 1 bis 4, dadurch gekennzeichnet, daß die Buchse (1) aus Kunststoff besteht.

6. Befestigungselement nach einem der Ansprüche 2 bis 5, dadurch gekennzeichnet, daß die Metallstreifen (11) U-förmig durch einen Steg (12) miteinander verbunden sind.

7. Befestigungselement nach einem der Ansprüche 2 bis 6, dadurch gekennzeichnet, daß die Metallstreifen (11) aus einem U-förmigen Einsatz (10) bestehen, dessen die Streifen verbindender Stegteil (12) den Endbereich des Loches verschließt.

8. Befestigungselement nach einem der Ansprüche 2 bis 7, dadurch gekennzeichnet, daß die Metallstreifen an mindestens einem ihrer Ränder mit mindestens einem abgewinkelten Fortsatz versehen sind.

9. Befestigungselement nach einem der Ansprüche 2-8, dadurch gekennzeichnet, daß die Metallstreifen (37) durch ein seitliches Stegteil (40) miteinander verbunden sind.

10. Befestigungselement nach einem der Ansprüche 2-9, dadurch gekennzeichnet, daß die die Metallstreifen (36) bildenden Schenkel des Einsatzes mit nach außen hin abgewinkelten Endbereichen (38) versehen sind, die in an dem unteren Ende der Buchse vorgesehene Aussparungen (39) greifen.

11. Befestigungselement nach Anspruch 10, dadurch gekennzeichnet, daß die abgewinkelten Endbereiche (38) schneidenartige Kanten besitzen.

12. Befestigungselement nach einem der Ansprüche 2-11, dadurch gekennzeichnet, daß der metallische Einsatz (52) in eine in Seitenansicht etwa rechteckige Aussparung (51) der Buchse (50) eingesetzt ist.

13. Befestigungselement nach Anspruch 12, dadurch gekennzeichnet, daß die streifenförmigen Schenkel des Einsatzes (52) mit herausgebogenen Zungen (56) und scharfkantigen Endbereichen versehen sind.

14. Befestigungselement nach einem der vorhergehenden Ansprüche, dadurch gekennzeichnet, daß der Stift zwischen seinem Kopf und seinem Schaftteil mit einem verdickten Bund (18,49) mit nockenartigem exzentrischen Durchmesser versehen ist, der in einem Bohrungsabschnitt der Befestigungsbohrung oder der Buchse liegt, der einen derart länglichen Querschnitt aufweist, daß der Stift nur eine etwa Vierteldrehung ausführen kann.

15. Befestigungselement nach einem der Ansprüche 2-14, dadurch gekennzeichnet, daß der Stift einen oberen Schaftbereich (65) mit einem selbstschneidenden Gewinde aufweist, das oberhalb der Metallstreifen in einen Bohrungsabschnitt der Buchse einschneidet.

16. Befestigungselement nach einem der vorhergehenden Ansprüche, dadurch gekennzeichnet, daß der Stift zwischen seinem Kopf und dem Schaft einen verbreiterten Bund (60) aufweist, dessen Durchmesser dem Durchmesser des gebördelten Befestigungsloches (61) entspricht, und daß der Bund (60) an seinem unteren Ende mit einer diesen verbreiternden Wulst (64) versehen ist, die an dem Rand des gebördelten Loches (31) anliegt.

17. Befestigungselement nach einem der vorhergehenden Ansprüche, dadurch gekennzeichnet, daß der Stift am unteren Ende seines Schaftes mit einem verbreiterten Nietkopf (70) versehen ist.

## Claims

1. Fastener for a part provided with a drilled mounting hole, preferably for a hinge element, with a dowel-like sleeve insertable in a pre-drilled hole, such that a pin provided with a head can be locked in the via hole of said sleeve by means of an approximately quarter-turn
characterised in that
the sleeve (1), which consists of elastic material, is provided, in the region of its tubular shaft, with at least one longitudinal slot (9), and that, in the slotted region, the hole has an elongate cross-section, and that
the shaft (19) of the pin has at least one portion having a cross-section corresponding approximately to the cross-section of the hole, said portion being provided, on its mutually opposing narrower sides, with cutting ridges (21) running circumferentially like a thread.

2. Fastener as claimed in Claim 1, characterised in that the mutually opposing walls of the diametrally broader sides of one portion of the hole in the sleeve (1) are formed from inserted metal strips (11).

3. Fastener as claimed in either of Claims 1 or 2, characterised in that the shaft (19) of the pin (15) has the form of the shaft of a self-tapping screw whose thread has been cut away on opposite sides.

4. Fastener as claimed in any of Claims 1 to 3, characterised in that part of the shaft (19) of the pin (15) has the cross-sectional shape of a rectangle with its narrow sides rounded.

5. Fastener as claimed in any of Claims 1 to 4, characterised in that the sleeve (1) consists of a plastic material.

6. Fastener as claimed in any of Claims 2 to 5, characterised in that the metal strips (11) are joined together in a U-shape by a ridge (12).

7. Fastener as claimed in any of Claims 2 to 6, characterised in that the metal strips (11) consist of a U-shaped insert (10), the ridge part (12) of which, connecting the shanks, closes the end portion of the hole.

8. Fastener as claimed in any of Claims 2 to 7, characterised in that the metal strips are provided on at least one of their edges with at least one angled extension.

9. Fastener as claimed in any of Claims 2 to 8, characterised in that the metal strips (37) are joined together by a lateral ridge part (40).

10. Fastener as claimed in any of Claims 2 to 9, characterised in that the shanks of the insert forming the metal strips (36) are provided with end portions (38) bent outwards which engage in recesses (39) provided at the lower end of the sleeve.

11. Fastener as claimed in Claim 10, characterised in that the end portions (38) bent outwards possess cutting edges.

12. Fastener as claimed in any of Claims 2 to 11, characterised in that the metal insert (52) is inserted into a recess (51) of the sleeve (50), said recess appearing approximately rectangular when viewed from the side.

13. Fastener as claimed in Claim 12, characterised in that the strip-like shanks of the insert (52) are provided with tongues (56) bent outwards and sharp-edged end portions.

14. Fastener as claimed in any of the preceding Claims, characterised in that, between its head and its shaft portion, the pin is provided with an enlarged collar (18, 49) with a cam-like eccentric diameter located in one section of the drilled hole of the mounting hole or the sleeve, the longitudinal cross-section of said collar being such that the pin can only execute an approximately quarter-turn.

15. Fastener as claimed in any of Claims 2 to 14, characterised in that the pin has an upper shaft portion (65) with a self-tapping thread that cuts into a section of the drilled hole of the sleeve above the metal strips.

16. Fastener as claimed in any of the preceding Claims, characterised in that, between its head and its shaft, the pin is provided with a widened collar (60) the diameter of which corresponds to the diameter of the edged mounting hole (61), and that the collar (60) is provided, at its lower end, with beading (64) widening it and resting on the edge of the edged hole (31).

17. Fastener as claimed in any of the preceding Claims, characterised in that the pin is provided, at the lower end of its shaft, with a widened rivet head (70).

## Revendications

1. Elément de fixation destiné à une pièce présentant un perçage de fixation, de préférence une pièce de charnière, comportant un manchon construit comme une cheville pouvant être inséré dans un trou pré-perçé, manchon construit comme une cheville dans le trou traversant duquel une pointe pourvue d'une tête peut être verrouillée par une rotation d'un quart de tour approximativement,
caractérisé
en ce que le manchon (1) consistant en matériau élastique présente dans la zone de sa tige tubulaire au moins une fente (9) en direction longitudinale, et que le trou présente une section transversale oblongue dans la zone fendue, et
que la tige (19) de la pointe comporte au moins une section qui présente une section transversale correspondant approximativement à la section transversale du trou, qui est pourvue sur ses deux côtés étroits se faisant face de crêtes (21) tranchantes s'étendant en direction de la circonférence à la manière d'un filet.

2. Elément de fixation selon la revendication 1, caractérisé en ce que les parois se faisant face des côtés plus larges de diamètre d'une section du trou du manchon (1) sont formées par des bandes métalliques (11) insérées.

3. Elément de fixation selon la revendication 1 ou 2, caractérisé en ce que la tige (19) de la pointe (15) présente la forme de la tige d'une vis autotaraudeuse dont les filets sont retranchés sur deux côtés se faisant face.

4. Elément de fixation selon l'une quelconque des revendications 1 à 3, caractérisé en ce qu'une partie de la tige (19) de la pointe (15) présente la forme de section transversale d'un rectangle avec des côtés étroits arrondis.

5. Elément de fixation selon l'une quelconque des revendications 1 à 4, caractérisé en ce que le manchon (1) est en plastique.

6. Elément de fixation selon l'une quelconque des revendications 2 à 5, caractérisé en ce que les bandes métalliques (11) sont reliées entre elles en forme de U par une barrette (12).

7. Elément de fixation selon l'une quelconque des revendications 2 à 6, caractérisé en ce que les bandes métalliques (11) consistent en une pièce insérée (10) en forme de U dont le dos (12) reliant les bandes ferme la zone d'extrémité du trou.

8. Elément de fixation selon l'une des revendications 2 à 7, caractérisé en ce que les bandes métalliques présentent à au moins un de leurs bords au moins une projection angulaire.

9. Elément de fixation selon l'une quelconque des revendications 2 à 8, caractérisé en ce que les bandes métalliques (37) sont reliées entre elles par une barrette (40) latérale.

10. Elément de fixation selon l'une quelconque des revendications 2 à 9, caractérisé en ce que les branches de la pièce insérée qui forme les bandes métalliques (36) présentent des zones d'extrémité (38) recourbées vers l'extérieur, qui s'engagent dans les échancrures (39) prévues à l'extrémité inférieure du manchon.

11. Elément de fixation selon la revendication 10, caractérisé en ce que les zones d'extrémité recourbées (38) présentent des arètes tranchantes.

12. Elément de fixation selon l'une quelconque des revendications 2 à 11, caractérisé en ce que la pièce insérée (52) métallique est insérée dans une échancrure (51) du manchon (50) qui a une forme approximativement rectangulaire vue de côté.

13. Elément de fixation selon la revendication 12, caractérisé en ce que les branches en forme de bandes de la pièce insérée (52) sont pourvues de langues (56) courbées vers l'extérieur et de zones d'extrémité à arètes tranchantes.

14. Elément de fixation selon l'une quelconque des revendications précédentes, caractérisé en ce que la pointe présente entre sa tête et sa tige une collerette épaissie (18, 49) avec un diamètre excentrique à la manière d'une came qui se trouve dans une section de perçage du perçage de fixation ou du manchon, qui présente une section transversale oblongue de sorte que la pointe ne peut décrire qu'un quart de rotation environ.

15. Elément de fixation selon l'une quelconque des revendications 2 à 14, caractérisé en ce que la pointe présente une zone de tige supérieure (65) avec un filet autotaraudeur qui perce dans une section de perçage du manchon au-dessus des bandes métalliques.

16. Elément de fixation selon l'une quelconque des revendications précédentes, caractérisé en ce que la pointe présente entre sa tête et la tige une collerette (60) élargie dont le diamètre correspond au diamètre du trou de fixation (61) bordé, et que la collerette (60) présente à son extrémité inférieure un bourrelet (64) élargissant ce bord inférieur, qui repose contre le bord du trou bordé (31).

17. Elément de fixation selon l'une quelconque des revendications précédentes, caractérisé en ce que la pointe est pourvue à l'extrémité inférieure de sa tige d'une tête de rivet (70) élargie.
